# EUROPEAN PATENT SPECIFICATION

(11) **EP 1 722 375 B1**
(45) Date of publication and mention of the grant of the patent: **26.12.2007**
(21) Application number: 05708109.3
(22) Date of filing: 01.02.2005
(51) Int. Cl.: G21C 17/06, G01N 27/16

(54) **METHOD AND DEVICE FOR MEASURING THE POWER DISSIPATED BY A HYDRIDATION REACTION IN TUBES AND TUBULAR CLADDINGS AND THE CORRESPONDING VARIATION IN ELECTRIC RESISTANCE**
VERFAHREN UND EINRICHTUNG ZUR MESSUNG DER DURCH EINE HYDRIERUNGSREAKTION IN RÖHREN UND RÖHRENMÄNTELN ABGEGEBENEN LEISTUNG UND DER ENTSPRECHENDEN VARIATION DES ELEKTRISCHEN WIDERSTANDS
PROCEDE ET DISPOSITIF PERMETTANT DE MESURER LA PUISSANCE DISSIPEE PAR UNE REACTION D'HYDRURATION DANS DES TUBES ET DES GAINES TUBULAIRES ET LA VARIATION DE RESISTANCE ELECTRIQUE

(30) Priority: 09.02.2004 ES 200400294
(43) Date of publication of application: 15.11.2006
(73) Proprietor: Consejo Superior de Investigaciones Cientificas, 28006 Madrid (ES); Iberdrola Generacion, 28005 Madrid (ES)
(72) Inventor: SACEDON ADELANTADO, J.L., Inst. Cic. Mat. Madrid, 28049 Madrid (ES); DIAZ MUNOZ, M., Inst. Cic. Mat. Madrid, 28049 Madrid (ES); MOYA CORRAL, J.S., Inst. Cic. Mat. Madrid, 28049 Madrid (ES); REMARTINEZ ZATO, Begona, Iberdrola Generacion, E-28005 MADRID (ES); IZQUIERDO GOMEZ, Jaime, IBERDROLA GENERACIÓN, E-28005 MADRID (ES)
(74) Representative: Ungria Lopez, Javier
(86) International application number: PCT/ES2005/070011
(87) International publication number: WO 2005/076286

(56) References cited:
- WO-A1-03/102607
- ES-A1- 2 165 823
- GB-A- 2 138 573
- JP-A- 2003 303 780
- US-A- 4 533 520

## Description

The present invention relates to measurement of hydridation reactions and kinetics of tubes and tubular claddings of metallic elements, metal alloys and any other material with and without protective coverings.

### STATE OF THE ART

The massive hydridation of metallic industrial components is one of the causes of their becoming brittle and can lead to catastrophic fracture due to the formation of cracks. This process takes place in components in contact with water under pressure and/or boiling and at high temperature, and can become acute when the component is exposed to high concentrations of hydrogen as a consequence of other processes. A case that has been known for some years is the hydridation of tubular fuel claddings in the cores of nuclear reactors, which can take place massively from inside the cladding in the event of loss of airtightness as a result of a primary failure. Patent W00223162 describes a method and device for measuring the resistance to hydridation in these tubular components in order to help in the selection of materials and design aimed at reducing these problems. Nevertheless, other measurements need to be determined in order to compare the hydridation kinetics, which permits the response to hydridation of the different elements and alloys of the tubular components to be compared and a choice to be made of those designs and compositions that will prevent or delay the appearance of these fractures in metallic industrial components.

So far, the determination of the hydridation kinetics of metals and alloys has been carried out by thermogravimetry and morphological studies of hydridation processes of pieces of material in an autoclave, which in some cases, as in the hydridation of fuel claddings, represents working conditions that are very different from those in which the hydridation of the component is produced.

### DESCRIPTION OF THE INVENTION

### Brief description of the invention

The present invention tackles the problem of providing new methods and tools for measuring the hydridation kinetics taking place in tubular components for industrial use.

The solution provided by this invention permits measurement of the hydridation kinetics in the actual tubular components, generally multi-layer, and under the same conditions of working temperature in which the hydridation of the component takes place, which is of particular economic relevance since it permits the design and choice of the appropriate composition of the different alloys used. An optimisation of these components will be able to help prevent unplanned shutdowns of commercial reactors. This possible improvement will also allow greater exploitation of the fuel by making it more robust, and a decrease in the mass of high-activity nuclear waste for the same amount of energy generated. By eliminating a possible source of leakage of components in the reactor water, the dosage of radiation received by maintenance personnel and personnel having to perform operations in the exchange zone will be reduced.

So, the first object of this invention consists of a new method for measuring hydridation kinetics at different temperatures, in industrial components, characterised in that it consists of measuring: a) the power dissipated by the hydridation reaction, hereinafter referred to as the dissipated hydridation power (DHP), as a function of time, along with its integral as a function of time hereinafter referred to as the dissipated hydridation energy (DHE), and b) the variation in electric resistance during that reaction, and in particular during the stage of dissolution of hydrogen in the component preceding the precipitation of hydrides in the material;

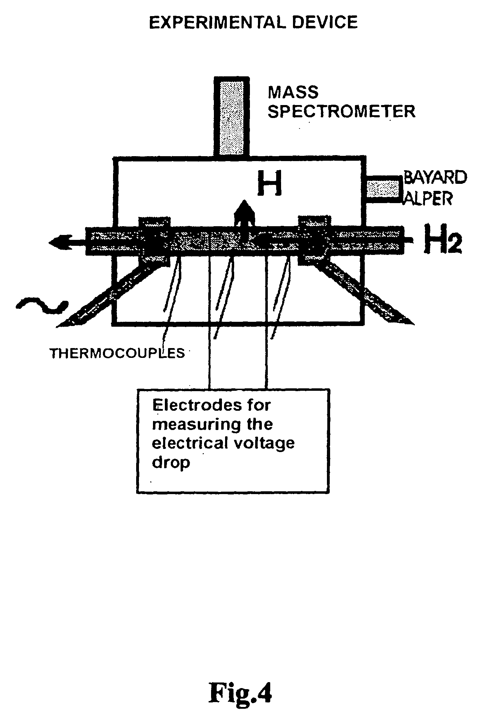

The second object of this invention consists of a device (Figure 4) for carrying out the aforementioned measurement method consisting of:
a) a high or ultra-high vacuum chamber in which the component to be analysed is inserted,
b) a gas line for causing hydrogen or a mixture of hydrogen with other gas(es) to pass through the interior of the component,
c) heating systems by the Joule effect, thermocouples and systems for temperature control in the component, and
d) two electrodes in the form of a ring or other well-defined geometry, arranged on the component symmetrically and equidistant from the central thermocouple connected with the outside of the device where the measurements are going to be made.

Finally, the third object of this invention consists of the use of the said method and device for making measurements of hydridation kinetics in industrial components of metallic elements, metal alloys and any other material with and without protective coverings, preferably tubular components such as tubes and tubular claddings for fuel in the cores of nuclear reactors.

### Detailed description of the invention

The first object of this invention consists of a new method for measuring hydridation kinetics, herein after the inventive method, at different temperatures, in industrial components of metallic elements, metal alloys and any other material with and without protective coverings, characterised in that it consists of measuring:
a) the power dissipated by the hydridation reaction, hereinafter the dissipated hydridation power (DHP), as a function of time, along with its integral as a function of time hereinafter referred to as the dissipated hydridation energy (DHE),
b) the variation in electric resistance during that reaction, and in particular during the stage of dissolution of hydrogen in the component preceding the precipitation of hydrides in the material;
and because the stages making up this method are:
i) insertion of the tubular component in a high or ultra-high vacuum chamber,
ii) circulation of hydrogen or a mixture of hydrogen with other gas(es) through the interior of the component, it being the permeation of the hydrogen via the wall of the component that causes the hydridation of the material,
iii) heating of the component by the Joule effect,
iv) determination of the dissipated hydridation power as a function of time, of the dissipated hydridation energy measured during the process, and of the electric resistance in the component by means of:
   iv.1) the voltage drop along the component, and
   iv.2) the variation in electric current applied for maintaining its temperature at the predetermined value for the hydridation reaction.

As used in the present invention, the term "industrial components" refers to tubular components, with a wall consisting of a single element or with multi-layer wall, as are tubes and tubular claddings for fuel in the cores of nuclear reactors.

The control of these industrial components by means of the inventive method will permit the design and choice of the suitable composition of the different alloys used for the manufacture of those components, thereby avoiding their fracture.

During the precipitation reaction and formation of hydrides, the heat of reaction causes a drop in the electric current being applied in order to keep the temperature constant, which leads to a decrease in the power necessary for maintaining that temperature. The variation or difference in the necessary power corresponds to the dissipated hydridation power (DHP) and is roughly proportional to the hydride precipitated per unit time. This variation or decrease is measured as a function of time and permits a comparison to be made of the hydridation kinetics in components of different structure and composition, which permits a criterion to be had for the choice of materials and design. During the process and by means of integration with respect to time, one obtains the energy dissipated in the hydridation reaction which is roughly proportional to the quantity of hydride precipitated.

The second object of this invention consists of a device (Figure 4), hereinafter the inventive device, for carrying out the inventive measurement method and which comprises:
a) a high or ultra-high vacuum chamber in which the component to be analysed is inserted,
b) a gas line for causing hydrogen or a mixture of hydrogen with other gas(es) to pass through the interior of the component,
c) heating systems by the Joule effect, thermocouples and systems for temperature control in the component, and
d) two electrodes in the form of a ring or other well-defined geometry, arranged on the component symmetrically and equidistant from the central thermocouple connected with the outside of the device where the measurements are going to be made.

During the hydridation reaction, the temperature in the interior of the component has to remain constant, for which a thermocouple and a temperature control system is used which acts on the current applied for heating the component (c). Moreover, in order to measure the voltage drop, and consequently the variation in electric resistance and the power dissipated during the hydridation reaction along the component during said reaction, the two electrodes are used arranged on the component (d).

Finally, the third object of this invention consists of the use of the inventive method and device for making measurements of hydridation kinetics in industrial components of metallic elements, metal alloys and any other material with and without protective coverings, preferably tubular components such as tubes and tubular claddings for fuel in the cores of nuclear reactors.

### DETAILED DESCRIPTION OF THE FIGURES

**Figure 1.- Variation in electric resistance during the hydridation process.** Following the variation in electric resistance owing to the increase in temperature, the first stage of growth, and once the temperature of the experiment has been reached, a sharp growth takes place, marked between the arrows, due to the dissolution of H in the metal, and the final maximum of this stage roughly coincides with the start of the precipitation of H in the form of hydrides.
**Figure 2.- Variation in dissipated hydridation power.** Once the temperature of the experiment has been reached, the DHP remains constant for a short interval, the incubation time, during which the H is dissolved without precipitating. Once that period has passed coinciding with the growth of electric resistance, the DHP grows rapidly, corresponding to the start of precipitation of H in the form of hydrides in the material.
**Figure 3.- Variation in dissipated hydridation energy.** This corresponds to the integral of Figure 2.
**Figure 4.- Diagram of the hydridation kinetics measurement device.** This shows the position of the electrodes used for measuring the voltage drop in the tube.

### EXAMPLES OF EMBODIMENT OF THE INVENTION

### Example 1.- Measurement of the hydridation kinetics in tubes or tubular claddings

A method for measuring the dissipated power and the electric resistance and thereby obtain the hydridation kinetics in tubes or tubular claddings is embodied as stated below.

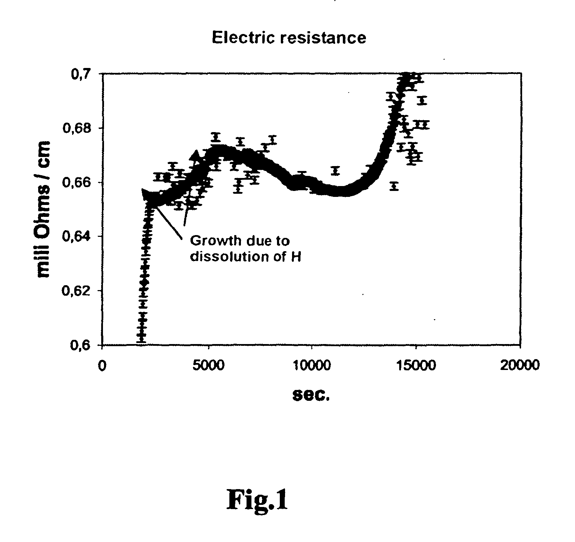

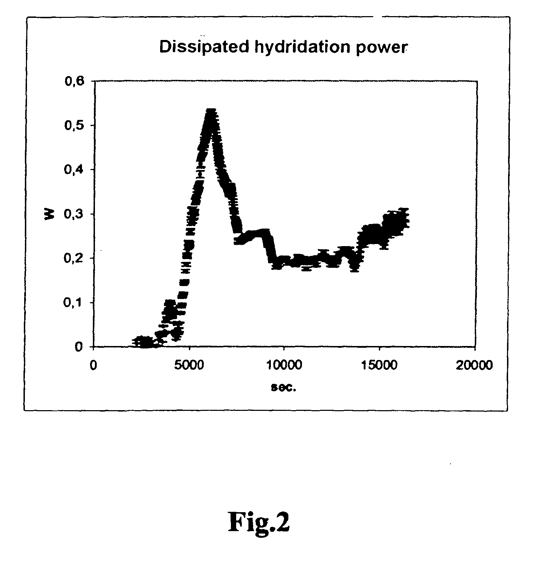

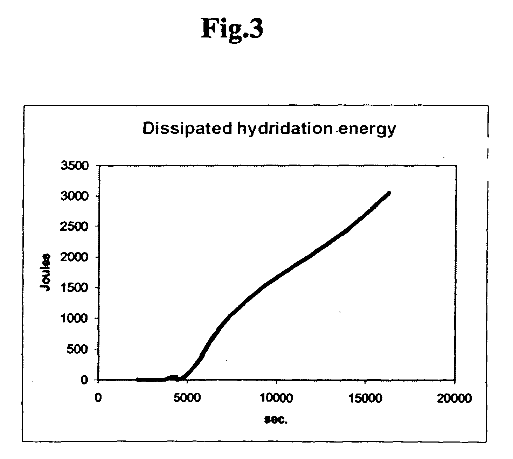

A nuclear fuel cladding of Zircaloy 2 is inserted in a high or ultra-high vacuum chamber; hydrogen or mixtures of hydrogen with other gas(es) is made to circulate via the interior of the tube at a pressure of 1 atmosphere and a renewal stream of 200 cm³ per minute. The partial pressure in the vacuum zone is 133,322·10⁻⁹ Pa (10⁻⁹ Torr) owing to the permeation of hydrogen through the walls of the cladding. The cladding is heated by the Joule effect and the temperature in the centre of the cladding is monitored and kept constant at 360°C (or other pre-established value) with a thermocouple and a temperature control system which acts on the current being applied in order to heat the cladding, the amount of current needed in order to maintain a constant temperature of 360°C in the absence of reaction being 30 A. The electrodes, located on both sides of the thermocouple, provide a measurement of the voltage drop in the cladding during the hydridation reaction. Together with the measurement of the current applied, this permits us to obtain the value of the power necessary for keeping the temperature constant, and to measure the electric resistance of the cladding. When the dilution of the hydrogen in the cladding starts, the electric resistance can grow up to 3% (Figure 1), though this variation can be less if the cladding previously contains a quantity of hydrogen, and no major changes are observed in the power necessary for keeping the temperature constant. When the precipitation and the formation of hydride starts, the heat of reaction means that the power necessary for keeping the temperature constant decreases, the difference in which gives us the value of DHP and, by integration, the dissipated hydridation energy or DHE. The DHP is roughly proportional to the hydride precipitated per unit time and the DHE to the total quantity of precipitated hydride. By stopping the process at different value of DHE, samples can be obtained with different thicknesses of the hydrides ring. These samples are very useful for mechanical studies and studies of the geometry of the precipitated hydrides. The comparison of the DHP curves permits a criterion to be had for selection of materials and design. Figure 1 shows the variation curve of electric resistance, in which the first maximum corresponds to the end of the dissolution process of hydrogen and the final maximum corresponds to the end of the hydridation process. Figure 2 shows the DHP curve, in which the maximum indicates that the precipitation reaction is very rapid at the start of the process. Figure 3 corresponds to the DHE curve.

## Claims

1. Method for measuring hydridation kinetics, at different temperatures, in industrial tubular components such as tubes and tubular claddings of metallic elements, metal alloys and any other material with and without protective coverings, **characterised in that** it consists of the measurement of:
a) the power dissipated by the hydridation reaction, hereinafter dissipated hydridation power, as a function of time, and of the dissipated hydridation energy, measured during the process, and
b) the variation in electric resistance during that reaction, and in particular during the stage of dissolution of hydrogen in the component preceding the precipitation of hydrides in the material,
the stages making up this method being:
i) insertion of the tubular component in a high or ultra-high vacuum chamber,
ii) circulation of hydrogen or a mixture of hydrogen with other gas(es) through the interior of the component, it being the permeation of the hydrogen via the wall of the component that causes the hydridation of the material,
iii) heating of the component by the Joule effect,
iv) determination of the power dissipated by the hydridation reaction as a function of time, of the dissipated hydridation energy measured during the process, and of the electric resistance in the component by means of:
iv.1) the voltage drop along the component, and
iv.2) the variation in electric current applied for maintaining its temperature at the predetermined value for the hydridation reaction.

2. Device for carrying out the measurement method of hydridation kinetics according to claim 1, **characterised in that** it comprises the following elements:
a) a high or ultra-high vacuum chamber in which the component to be analysed is insertable,
b) a gas line for causing hydrogen or a mixture of hydrogen with other gas(es) to pass through the interior of the component,
c) heating systems by the Joule effect, thermocouples and systems for temperature control in the component, and
d) two electrodes in the form of a ring or other well-defined geometry, arranged symmetrically and equidistant from a central thermocouple.

3. Use of the method and device according to claims 1 and 2, respectively, for making measurements of hydridation kinetics in industrial components of metallic elements, metal alloys and any other material with and without protective coverings.

4. Use according to claim 3, **characterised in that** the industrial components are tubular, among others, the tubes and tubular claddings for fuel in the cores of nuclear reactors.

## Patentansprüche

1. Verfahren zum Messen der Hydrierkinetik bei unterschiedlichen Temperaturen in röhrenförmigen Industriebauteilen, wie etwa Röhren und röhrenförmigen Verkleidungen von Metallelementen, Metalllegierungen und einem beliebigen anderen Material mit und ohne Schutzbeschichtungen, **dadurch gekennzeichnet, dass** das Verfahren aus folgenden Messungen besteht:
a) der Leistung, die durch die Hydrierreaktion verbraucht wird, im folgenden die verbrauchte Hydrierleistung, als Funktion der Zeit, und der verbrauchten Hydrierenergie, gemessen während des Vorgangs, und
b) der Schwankung des elektrischen Widerstandes während dieser Reaktion und insbesondere währen des Stadiums der Lösung von Wasserstoff im Bauteil, die der Abscheidung von Hydriden im Material vorausgeht,
wobei die Stufen, die das Verfahren bilden, folgende sind:
i) Einfügen des röhrenförmigen Bauteils in eine Kammer mit hohem oder ultrahohem Vakuum,
ii) Umwälzen des Wasserstoffes oder eines Gemisches von Wasserstoff mit einem anderen Gas (anderen Gasen) durch das Innere des Bauteils, wobei dies die Permeation des Wasserstoffes über die Wand des Bauteils ist, das die Hydrierung des Materials verursacht,
iii) Erwärmen des Bauteils durch den Joule-Effekt,
iv) Bestimmen der Leistung, verbraucht durch die Hydrierreaktion, als Funktion der Zeit, der verbrauchten Hydrierenergie, die während des Vorgangs gemessen wird, und des elektrischen Widerstandes im Bauteil mit Hilfe:
iv.1) des Spannungsabfalls entlang des Bauteils, und
iv.2) der Schwankung des elektrischen Stroms, der angelegt wird, um dessen
Temperatur auf dem vorbestimmten Wert für die Hydrierreaktion zu halten.

2. Vorrichtung zum Ausführen des Messverfahrens der Hydrierkinetik nach Anspruch 1, **dadurch gekennzeichnet, dass** sie die folgenden Elemente enthält:
a) eine Kammer mit hohem oder ultra hohem Vakuum, in die das zu analysierende Bauteil eingeführt werden kann,
b) eine Gasleitung, die bewirkt, dass der Wasserstoff oder ein Gemisch aus Wasserstoff mit einem anderen Gas (anderen Gasen) das Innere des Bauteils durchläuft,
c) Heizsysteme, die den Joule-Effekt nutzen, Thermoelemente und Systeme für die Temperatursteuerung im Bauteil, und
d) zwei Elektroden in Gestalt eines Ringes oder einer anderen hinlänglich bekannten Geometrie, die symmetrisch und in gleichem Abstand von einem zentralen Thermoelement angeordnet sind.

3. Verwendung des Verfahrens und der Vorrichtung nach Anspruch 1 bzw. 2, zur Ausführung von Messungen der Hydrierkinetik In Industriellen Bauteilen metallischer Elemente, Metalllegierungen und einem beliebigen anderen Material mit oder ohne Schutzbeschichtungen.

4. Verwendung nach Anspruch 3, **dadurch gekennzeichnet, dass** die industriellen Bauteile röhrenförmig und unter anderem die Röhren und röhrenförmige Verkleidungen für Brennstoff in den Kernen von Nuklearreaktoren sind.

## Revendications

1. Procédé de mesure d'une cinétique d'hydruration, à différentes températures, dans des composants tubulaires industriels tels que des tubes et des gaines tubulaires d'éléments métalliques, d'alliages métalliques et d'autres matériaux avec et sans revêtements de protection, **caractérisé en ce qu'**il consiste en la mesure de :
a) la puissance dissipée par la réaction d'hydruration, désignée ci-après « puissance d'hydruration dissipée », en fonction du temps, et de l'énergie d'hydruration dissipée, mesurée pendant le processus, et
b) de la variation de la résistance électrique pendant cette réaction, et en particulier pendant l'étape de dissolution de l'hydrogène dans le composant précédant la précipitation des hydrures dans le matériau,
les étapes constituant ce procédé étant :
i) l'insertion du composant tubulaire dans une chambre à vide poussé ou à vide très poussé,
ii) la circulation d'hydrogène ou d'un mélange d'hydrogène et d'un autre/d'autres gaz à l'intérieur du composant, qui constitue la perméation de l'hydrogène via la paroi du composant qui provoque l'hydruration du matériau,
iii) le chauffage du composant par l'effet de Joule,
iv) la détermination de la puissance dissipée par la réaction d'hydruration en fonction du temps, de l'énergie d'hydruration dissipée mesurée pendant le processus, et de la résistance électrique dans le composant à l'aide de :
iv.1) la chute de tension le long du composant, et
iv.2) la variation du courant électrique appliqué afin de maintenir sa température la valeur prédéterminée pour la réaction d'hydruration.

2. Dispositif permettant d'effectuer le procédé de mesure d'une cinétique d'hydruration selon la revendication 1, **caractérisé en ce qu'**il comprend les éléments suivants :
a) une chambre à vide poussé ou à vide très poussé dans laquelle le composant à analyser peut être inséré,
b) une conduite de gaz destinée à faire passer l'hydrogène ou un mélange d'hydrogène et d'un autre/d'autres gaz à l'intérieur du composant,
c) des systèmes de chauffage par l'effet de Joule, des thermocouples et des systèmes de régulation de la température dans le composant, et
d) deux électrodes ayant la forme d'un anneau ou toute autre géométrie bien définie, agencées symétriquement et à équidistance d'un thermocouple central.

3. Utilisation du procédé et du dispositif selon les revendications 1 et 2, respectivement, afin d'effectuer des mesures de cinétiques d'hydruration dans des composants industriels d'éléments métalliques, d'alliages métalliques et de tout autre matériau avec et sans revêtements de protection.

4. Utilisation selon la revendication 3, **caractérisée en ce que** les composants industriels sont tubulaires, entre autres, comme les tubes et les gaines tubulaires destinés au combustible dans les noyaux de réacteurs nucléaires.
